# FASCICULE DE BREVET EUROPEEN

(11) **EP 2 393 652 B1**
(45) Date de publication et mention de la délivrance du brevet: **03.10.2012**
(21) Numéro de dépôt: 10705900.8
(22) Date de dépôt: 27.01.2010
(51) Int. Cl.: B32B 3/12, B32B 3/18, B64C 1/40, G10K 11/172

(54) **STRUCTURE À ÂME ALVÉOLAIRE APTE À ÊTRE UTILISÉE DANS UN PANNEAU STRUCTURANT POUR UNE NACELLE DE TURBORÉACTEUR**
WABENKERNSTRUKTUR FÜR EINE BAUPLATTE EINER TRIEBWERKSGONDEL
HONEYCOMB CORE STRUCTURE FOR USE IN A STRUCTURAL PANEL FOR A JET ENGINE NACELLE

(30) Priorité: 05.02.2009 FR 0900499
(43) Date de publication de la demande: 14.12.2011
(73) Titulaire: Aircelle, 76700 Gonfreville L'Orcher (FR)
(72) Inventeur: DESCHAMPS, Thierry, F-76280 Heuqueville (FR); DESJOYAUX, Bertrand, F-76310 Saint Adresse (FR); MOUTIER, John, F-76620 Le Havre (FR)
(74) Mandataire: Gaillarde, Frédéric F. Ch.
(86) Numéro de dépôt international: PCT/FR2010/000068
(87) Numéro de publication internationale: WO 2010/089473

(56) Documents cités:
- EP-A- 0 798 107
- EP-A- 1 889 713
- WO-A-2007/137607
- WO-A-2008/113904

## Description

La présente invention concerne une structure à âme alvéolaire apte à être utilisée dans un panneau structurant pour une nacelle de turboréacteur.

L'invention concerne également un panneau et une nacelle comportant une telle structure à âme alvéolaire et un procédé de fabrication d'une telle structure.

Les turboréacteurs d'avion sont entourés d'une nacelle visant à les protéger et à assurer le fonctionnment de ces derniers. La nacelle est formée de parois consituées de panneaux non structurants et de panneaux structurants. Ces derniers assurent une rigidité suffisante à la nacelle. Pour cela, les panneaux structurants comportent habituellement une ou plusieurs couches de structures à âme alvéolaire (structures couramment appelées « en nid d'abeille »). Ces couches sont généralement revêtues d'une peau sur leur face dite externe, c'est-à-dire la plus éloignée radialement de l'axe du moteur, et sur leur face interne, c'est-à-dire la plus proche radialement de l'axe du moteur.

Le panneau structurant est ensuite assemblé en disposant les différentes peaux et couches qui sont alors encollées sur un moule à la forme requise. L'ensemble subit une cuisson dans un four de manière à serrer les couches et polymériser les adhésifs.

Parallèlement, les turboréacteurs sont générateurs d'une pollution sonore importante. Il existe donc une forte demande visant à réduire cette pollution, et ce d'autant plus que les turboréacteurs utilisés deviennent de plus en plus puissants.

Pour ce faire, certains panneaux employés sont des panneaux structurants de type acoustique dont les couches sont généralement revêtues sur la face externe d'une peau imperméable à l'air, dite « pleine », et sur la face interne d'une peau perforée perméable à l'air, dite « acoustique ».

Le panneau structurant acoustique peut comprendre en outre plusieurs couches de structures à âme alvéolaire entre lesquelles se situe une peau multiperforée dite « septum ». Cette peau est collée entre les structures à âme alvéolaire par chauffage lors de la phase d'assemblage / collage du panneau.

De tels panneaux constituent des résonnateurs acoustiques aptes à « piéger » le bruit et donc à atténuer les émissions sonores en direction de l'extérieur de la nacelle.

D'une façon connue, une structure à âme alvéolaire comprend au moin un bloc à âme alvéolaire comprenant une partie centrale comportant des cellules alvéolaires de coeur et deux parties latérales comportant chacune une pluralité de cellules alvéolaires de jonction.

Les propriétés acoustiques du panneau structurant acoustique, c'est-à-dire son taux d'absorption du bruit en fonction de la fréquence et du niveau sonore dudit bruit, dépendent notamment de la jonction du ou des blocs à âme alvéolaire.

Le jointage des cellules alvéolaires de jonction est couramment réalisé à l'aide d'une colle moussante, telle que la colle FM410®, qui a une importante capacité d'expansion. Les bords adjacents du ou des bloc à âme alvéolaire sont enduits de la colle qui, lors de son expansion, obstrue les cellules alvéolaires en créant des surépaisseurs.

L'utilisation de colle nécessite un temps de pose et de découpe des surépaisseurs trop important d'un point de vue industrielle.

De plus, ces surépaisseurs présentent l'inconvénient de diminuer la surface acoustique efficace de la structure à âme alvéolaire et aussi de provoquer des ruptures brutales d'impédances qui contribue à la diminution de la performance acoustique du panneau acoustique lors du fonctionnement du turboréacteur.

Il est également connu de la demande EP 1 889 713 une structure à âme alvéolaire dont les cellules alvéolaires de jonction présentent une paroi supplémentaire de jonction. Par définition, une « paroi alvéolaire de jonction » n'est pas engagée dans la formation de la cellule alvéolaire. La jonction est réalisée en superposant les parois supplémentaires de jonction des cellules alvéolaires de jonction appartenant à deux zones de jonction distinctes et en tordant en spirale lesdites deux parois supplémentaires de jonction ainsi superposées.

Cependant, une telle structure à âme alvéolaire est complexe à fabriquer.

Un but de la présente invention est donc de fournir une structure à âme alévolaire présentant une zone de jonction simple à fabriquer et efficace.

A cet effet, selon un premier aspect, l'invention a pour objet une structure à âme alvéolaire apte à être utilisée dans un panneau structurant pour une nacelle de turboréacteur comprenant au moin un bloc à âme alvéolaire comprenant une partie centrale comportant des cellules alvéolaires de coeur et au moins deux parties latérales comportant chacune une pluralité de cellules alvéolaires de jonction dont au moins une partie des cellules alvéolaires de jonction comporte au moins une paroi supplémentaire apte à former une jonction, caractérisée en ce que le ou les blocs à âme alvéolaire sont liés par au moins une zone de jonction formée par poinçonnage de deux parois supplémentaires superposées l'une sur l'autre et provenant de cellules alvéolaires de jonction appartenant à des parties latérales distinctes.

La structure de l'invention comporte au moins une zone de jonction formée par poinçonnage de deux parois supplémentaires superposées l'une sur l'autre et provenant de cellules alvéolaires de jonction appartenant à des parties latérales distinctes. De ce fait, la zone de jonction est simple à mettre en oeuvre car il consiste à poinçonner deux parois de deux cellules alvéolaires de jonction. Le temps de fabrication d'une telle structure est également réduit par rapport à l'art antérieur, la structure de l'invention ne nécessitant pas d'apporter une finition, telle qu'un découpage.

De plus, une jonction par poinçonnage comme celle de l'invention assure une liaison efficace de ladite structure tout en permettant un gain de masse sur un panneau comportant la structure de l'invention.

D'un point de vue acoustique, la jonction pour former une structure de l'invention ne nécessite pas l'emploi de colle ou de tout autre matériau obstruant les cellules alvéolaires. Par conséquent, les ruptures d'impédance au niveau de la zone de jonction sont réduites voire d'éliminées lorsque ces panneaux ont une fonction acoustique à assurer.

La jonction par poinçonnage de l'invention permet également de ne pas impacter sur l'intégrité des cellules alvéolaires et donc sur la capacité structurante de la structure à âme alvéolaire résultante.

En outre, une telle jonction peut être mise en oeuvre pour des structures à âme alvéolaire formées de blocs à âme alvéolaire constitués de cellules alvéolaires de tailles et de formes différentes.

Selon d'autres caractéristiques de l'invention, la structure de l'invention comporte l'une ou plusieurs des caractéristiques optionnelles suivantes considérées seules ou selon toutes les combinaisons possibles :
- la ou les parois supplémentaires sont dépliées ce qui permet de faciliter le poinçonnage,
- la longeur de la ou des parois supplémentaires est supérieure au diamètre du poinçonnage et inférieure ou égale à la longueur du côté d'une cellule alvéolaire de l'âme alvéolaire,
- les cellules alvéolaires de jonction et de coeur sont constituées de métal, d'un alliage ou d'un matériau composite ce qui permet de fabriquer les cellules alvéolaires de coeur et de jonction,
- la structure de l'invention comporte une pluralité de blocs à âme alvéolaire définissant une pluralité de zones de jonction ce qui permet d'adapter le panneau structurant à la résistance mécanique voulue et également, le cas échéant, à l'acoustique désirée,
- la structure de l'invention comporte un unique bloc à âme alvéolaire joint sur lui-même ce qui permet un gain de temps de fabrication.

Selon un deuxième aspect, l'invention a pour objet un panneau structurant caractérisé en ce qu'il comporte une structure de l'invention.

De préférence, le panneau de l'invention est un panneau acoustique.

Selon un troisième aspect, l'invention a pour objet une nacelle caractérisée en ce qu'elle comporte un panneau de l'invention.

Selon un autre aspect, l'invention a pour objet un procédé de fabrication d'une structure à âme alvéolaire selon l'invention, caractérisé en ce qu'il comporte des étapes où :
A-on forme au moins une paroi supplémentaire sur des cellules alvéolaires latérales d'au moins un bloc à âme alvéolaire définissant deux parties latérales encadrant une partie centrale;
B-on superpose au moins partiellement les parois supplémentaires des cellules alvéolaires de jonction appartenant à deux parties latérales distinctes ;
C-on joint le ou les blocs à âme alvéolaire en poinçonnant les parois supplémentaires ainsi supperposées par un moyen de poinçonnage pour former la structure à âme alvéolaire.

Selon un mode de réalisation préféré, dans l'étape A, on forme la ou les parois supplémentaires en coupant sensiblement transversalement un bloc à âme alvéolaire dont les cellules alvéolaires sont expansées.

Selon une variante préférée, dans l'étape B, on superpose les parois supplémentaires lorsque les cellules alvéolaires jonction et/ou de coeur ne sont pas expansées.

Selon une autre variante préférée, dans l'étape C, le moyen de poinçonnage est une pince à oeillets.

L'invention sera davantage comprise à la lecture de la description non limitative qui va suivre, faite en référence aux figures ci-annexées.
- La figure 1 est une vue en coupe d'un panneau structurant monocouche selon la présente invention ;
- La figure 2 est une vue en coupe d'un panneau structurant bicouche selon la présente invention ;
- La figure 3 est une vue du dessus d'une structure de l'invention ;
- La figure 4 est un agrandissement de la zone IV de la figure 3 ;
- Les figures 5 à 7 sont des variantes du mode de réalisation de la figure 4.

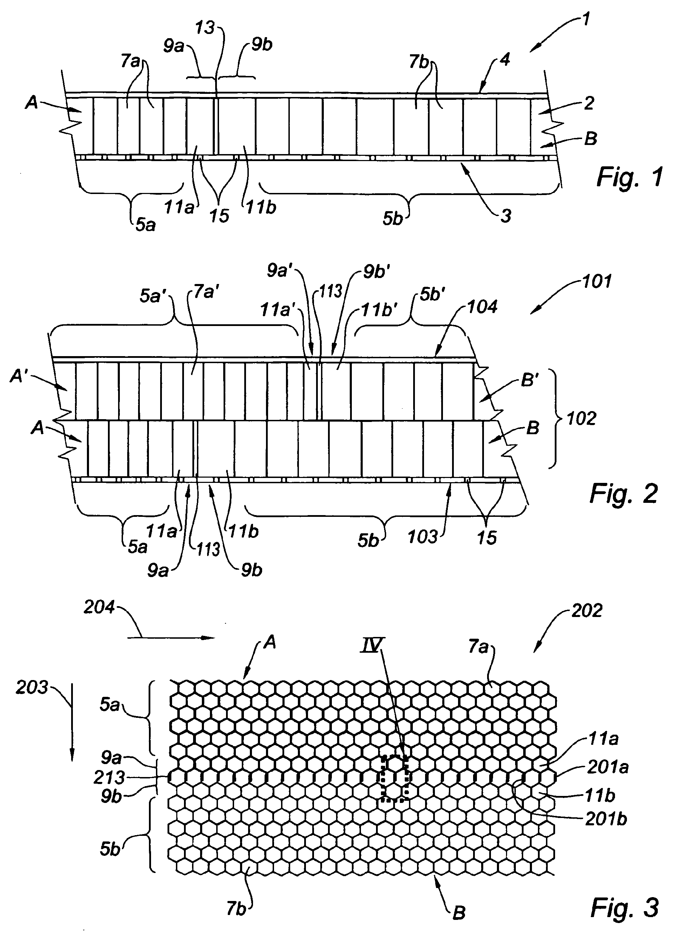

Comme représenté à la figure 1, un panneau structurant 1 selon l'invention de type panneau acoustique monocouche comprend une structure à âme alvéolaire 2 de l'invention formée d'un ou de plusieurs, et en l'espèce deux blocs à âme alvéolaire A et B joints entre eux. Dans le cas où la structure de l'invention 2 comporte une pluralité de blocs à âme alvéolaire A, B définissant une pluralité de zones de jonction, il est alors possible d'adapter le panneau structurant 1 de l'invention à la résistance mécanique voulue et également, le cas échéant, à l'absorption acoustique désirée. Selon un mode de réalisation préféré, la structure de l'invention comporte un unique bloc à âme alvéolaire joint sur lui-même. Ainsi, on obtient une seule zone de liaison ce qui permet de gagner du temps de lors de la fabrication de la structure de l'invention.

La structure à âme alvéolaire 2 est prise en sandwich entre une peau interne 3 et une peau externe 4.

Ces deux blocs à âme alvéolaire A, B comportent une partie centrale 5 comprenant des cellules alvéolaires de coeur 7a, 7b et typiquement plusieurs, en l'espèce deux parties latérales 9a, 9b comprenant chacune une pluralité de cellules alvéolaires de jonction 11a, 11b. Les cellules alvéolaires de jonction 11 a, 11 b de chaque bloc A et B sont liées entre elles de sorte à former une zone de jonction 13 dont les caractéristiques seront détaillées ci-après.

Un bloc peut présenter toute forme géométrique dont une forme sensiblement carré ou ovale. La ou les parties latérales sont disposées entre le bord dudit bloc et la partie centrale. Ainsi, dans le cas d'une forme sensiblement carrée ou rectangulaire, ledit bloc peut présenter jusqu'à quatre parties latérales. De manière générale, la zone de jonction entre une pluralité de bloc peut être réalisée sur une partie ou sur la totalité des bords dudit bloc.

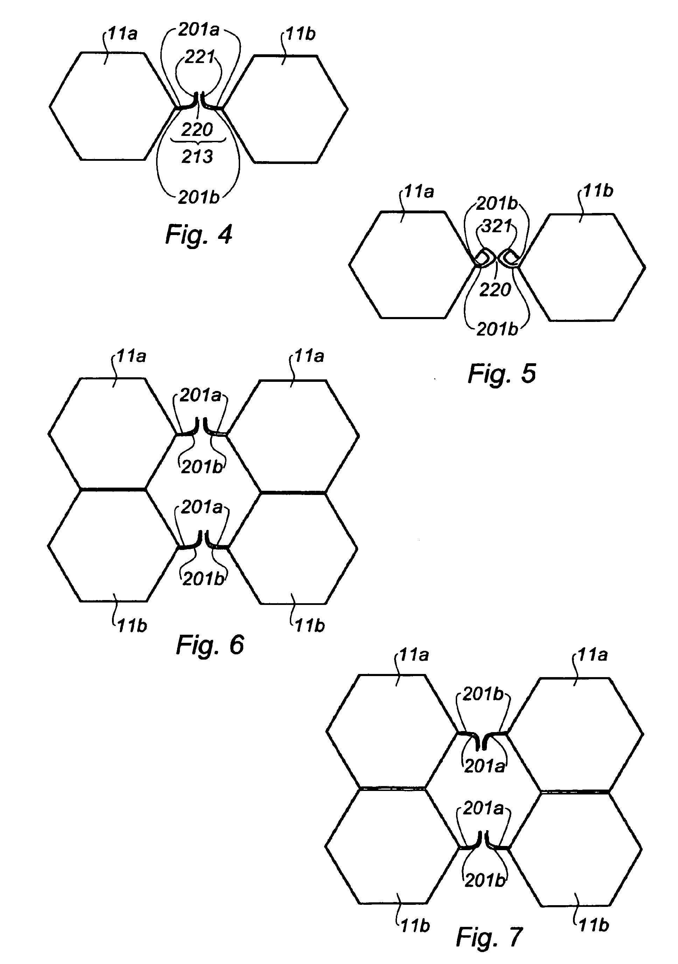

Comme cela est visible sur les figures 3 et 4, les cellules alvéolaires de coeur 7a, 7b et les cellules alvéolaires de jonction 11a, 11b présentent en l'espèce des sections hexagonales, formant ainsi des structures dites « en nid d'abeille ». Il est possible que lesdites cellules alvéolaires 7a, 7b et 11a, 11b présentent des sections de toute forme géométrique autre qu'hexagonales. Lorsque les cellules alvéolaires 7a, 7b et 11a, 11b forment ainsi des structures dites « en nid d'abeille » quelque soit la forme de la section, lesdites cellules alvéolaires 7a, 7b et 11a, 11b sont dites « expansées ». Lorsque lesdites cellules 7a, 7b et 11 a, 11 b sont sous forme de feuille, c'est-à-dire non sous forme de nid d'abeille, lesdites cellules alvéolaires 7a, 7b et 11 a, 11 b sont dites « non expansées ».

Comme on peut le voir sur la figure 1, la section des cellules alvéolaires de coeur 7a et de jonction 11a du bloc A peut être par exemple inférieure à celle des cellules alvéolaires de coeur 7b et de jonction 11b du bloc B, de manière à répondre à des contraintes acoustiques et/ou mécaniques imposées par le cahier des charges du constructeur.

De manière préférée, les cellules alvéolaires de jonction 11 a, 11 b et de coeur 7a, 7b sont constituées de métal, d'un alliage ou d'un matériau composite afin de faciliter la fabrication des cellules alvéolaires de coeur 7a, 7b et de jonction 11 a, 11 b et d'apporter une bonne résistance à ces dernières. Le matériau formant la peau interne 3 peut être réalisé dans un matériau métallique tel que l'aluminium ou le titane, ou encore en tissu, et le matériau formant la peau externe 4 peut être un matériau composite multicouche ou un matériau métallique tel que l'aluminium ou le titane.

Le panneau structurant 1 tel que représenté à la figure 1 est un panneau acoustique. Dans ce cas, la peau interne 3 comporte des perforations 15 situées en vis-à-vis des cellules alvéolaires de coeur 7a, 7b et de jonction 11 a, 11 b. Ainsi, le panneau structurant 1 est destiné à absorber les nuisances sonores engendrées par le fonctionnement du turboréacteur.

Dans une variante représenté à la figure 2, le panneau structurant 101 est un panneau bicouche selon l'invention comprenant deux couches de blocs à âme alvéolaire, formées respectivement par des blocs A, B et A', B'. Lesdites couches étant assemblées entre elles par des moyens connus et prises en sandwich entre une peau interne 103 et une peau externe 104 analogues à celles de la figure 1. Les autres éléments formant le panneau structurant 101 sont identiques à ceux du panneau structurant 1 représenté à la figure 1, les références correspondantes étant les mêmes.

Selon une variante, il est possible d'obtenir un panneau structurant comportant un nombre de couches de blocs à âme alvéolaire supérieur à 2, notamment supérieur ou égal à 3.

Dans ce panneau bicouche, les blocs à âme alvéolaire A, B d'une part et A', et B' d'autre part sont joints entre eux dans une ou plusieurs zones de jonction 113.

Le principe de fonctionnement d'un panneau acoustique comme ceux 1 et 101 représentés aux figures 1 et 2 est connu en soi : le panneau 1, 101 est destiné à être monté dans la paroi interne d'une nacelle d'aéronef de manière que la peau interne 3, 103 soit située en vis-à-vis du moteur qui se trouve dans cette nacelle.

Le bruit émis par ce moteur pénètre dans les cellules alvéolaires A, B par l'intermédiaire des orifices 15 situés dans la peau interne 3, 103 et vibre à l'intérieur de ces cellules alvéolaires de coeur 7a, 7b et de jonction 11 a, 11 b qui constituent des résonateurs acoustiques, permettant ainsi une dissipation de l'énergie acoustique et une réduction consécutive du niveau de bruit. Afin d'améliorer l'absorption acoustique, il est possible d'appliquer une peau perforée, encore appelée septum, entre les deux couches de blocs à âme alvéolaire A, B et A', B' du panneau structurant 101 afin que les cellules alvéolaires de coeur 7a', 7b' et de jonction 11 a', 11 b' des blocs A' et B' constituent également des résonateurs acoustiques.

Comme représenté aux figures 3 et 4, dans la structure de l'invention 202, les cellules alvéolaires de jonction 11 a et 11 b comportent au moins une paroi supplémentaire 201 a et 201 b apte à former une jonction 213.

Le ou les blocs à âme alvéolaire A et B sont liés par au moins une zone de jonction 213 formée par poinçonnage de deux parois supplémentaires superposées 201 a et 201 b l'une sur l'autre et provenant de cellules alvéolaires de jonction 11 a et 11 b appartenant à des parties latérales distinctes 9a et 9b (voir figures 3 et 4). Le poinçonnage employé dans le cadre de la présente invention permet de laisser une empreinte au niveau de la zone de jonction.

Le poinçonnage peut se faire selon n'importe quel angle pris par rapport aux parois supplémentaires 201 a et 201 b sensiblement superposées l'une sur l'autre pourvu que ledit angle soit adapté pour permettre un poinçonnage des parois supplémentaires 201 a et 201 b efficace. Dans le mode de réalisation représenté aux figures 3 et 4, l'angle de poinçonnage par rapport aux parois supplémentaires sensiblement superposées 201 a et 201b est sensiblement égale à 90°.

Selon un mode de réalisation préféré, la ou les parois supplémentaires 201 a et 201 b sont dépliées afin d'obtenir un bon chevauchement de ces dernières. Ainsi, on améliore et on facilite le poinçonnage.

Selon une variante, la ou les parois supplémentaires 201 a et 201 b ne sont pas dépliées, notamment lorsque lesdites parois sont formées dans le sens « ruban » 203, correspondant à l'orientation du bloc A, B à âme alvéolaire avant expansion (voir figure 3). Le sens « d'expansion » 204 correspond à une direction perpendiculaire à la direction du sens ruban 203 (voir figure 3). Le sens « expansion » 204 permet de former typiquement des cellules alvéolaires 7a, 7b et 11 a, 11 b dites « expansées », à savoir la structure en nid d'abeille.

La ou les parois supplémentaires 201 a et 201 b sont sensiblement planes ou légèrement incurvées.

De préférence, la longeur de la ou des parois supplémentaires 201 a et 201 b est supérieure au diamètre du poinçonnage et inférieure ou égale à la longueur du côté d'une cellule alvéolaire de l'âme alvéolaire. La longueur des parois supplémentaires peuvent être sensiblement identiques ou différentes.

Les figures 3 et 4 représentent un mode de réalisation dans lequel le poinçonnage est réalisé sur deux blocs à âme alvéolaire A et B ayant une configuration particulière. A savoir, les parois supplémentaires 201 a et 201 b sont montées sur une arête de l'hexagone formée par la cellule alvéolaire de jonction 11a, 11b. Selon une variante, la paroi supplémentaire 201 a et 201 b peut être disposée sur un côté de la cellule alvéolaire de jonction 11a, 11b ou sur une arête de cette dernière. Selon une autre variante, une cellule alvéolaire comporte deux parois supplémentaires 201 a, 201 b, voire plus.

Dans le mode de réalisation représenté à la figure 4, les parois supplémentaires 201 a et 201 b poinçonnées présentent un orifice 220 percé par le poinçon entouré d'un pourtour 221. Dans le cas de la figure 4, le pourtour 221 présente sensiblement la forme d'un entonnoir. Un tel pourtour 221 peut être obtenu par un poinçon connu de l'homme du métier. Le pourtour peut être plus ou moins replié sur lui-même de sorte à former un crochet 321, comme représenté à la figure 5. Un tel pourtour recourbé 321 est obtenu par exemple avec un poinçon associé à un embout supplémentaire permettant de recourber le pourtour 221. La présence d'un pourtour recourbé comme représenté à la figure 5 améliore la meilleure tenue mécanique de la zone de jonction.

Le sens de recouvrement des parois supplémentaires 201 a et 201 b peut être régulier. Ainsi, de manière régulière, la paroi supplémentaire 201 b appartenant à la cellule alvéolaire de jonction 11 b appartenant à l'un des blocs B peut recouvrir systématiquement au moins partiellement la paroi supplémentaire 201 a appartenant à la cellule alvéolaire de jonction 11a appartenant à l'autre bloc A (voir figure 3). Selon une variante, la paroi supplémentaire 201 b recouvre sensiblement la paroi supplémentaire 201 a puis, alternativement, la paroi supplémentaire 201 a recouvre sensiblement la paroi supplémentaire 201 b. Selon encore une autre variante, le sens de recouvrement par une paroi supplémentaire est non régulière (voir figure 6).

En outre, le poinçonnage peut être réalisé dans un sens unique, alternativement dans un sens puis dans l'autre ou bien encore dans un sens et dans l'autre de manière non régulière (voir figure 7).

Selon un autre aspect de l'invention, le procédé de fabrication la structure à âme alvéolaire 2, 102 et 202 est obtenue par un procédé de fabrication comportant les étapes où:
A-on forme au moins une paroi supplémentaire 201 a, 201 b sur des cellules alvéolaires latérales 11 a, 11 b d'au moins un bloc à âme alvéolaire A, B définissant deux parties latérales 9a, 9b encadrant une partie centrale 5a, 5b;
B-on superpose au moins partiellement les parois supplémentaires 201 a, 201 b des cellules alvéolaires de jonction 11 a et 11 b ainsi formées appartenant à deux parties latérales distinctes 9a et 9b ;
C-on joint le ou les blocs à âme alvéolaire A, B en poinçonnant les parois supplémentaires 201 a, 201 b ainsi supperposées par un moyen de poinçonnage pour former la structure à âme alvéolaire de l'invention 2, 102 et 202.

Selon un mode de réalisation préféré, dans l'étape A, on forme la ou les parois supplémentaires 201 a, 201 b en coupant sensiblement transversalement un bloc à âme alvéolaire A, B dont les cellules alvéolaires de jonction 11 a, 11 b et/ou de coeur 7a, 7b sont expansées, à savoir les parois ont été sensiblement étirées afin de former une structure nid d'abeille. Dans une variante, on rapporte les parois supplémentaires 201 a et 201 b sur les cellules de jonction 11 a, 11 b expansées ou non. Selon encore une autre variante, les parois supplémentaires 201a et 201 b sont formées lors de la formation des cellules alvéolaires de jonction 11a et 11b que ces dernières soient expansées ou non.

Selon un autre mode de réalisation, dans l'étape B, on superpose les parois supplémentaires 201a, 201 b lorsque les cellules alvéolaires de jonction 11a, 11 b et/ou de coeur 7a, 7b ne sont pas expansées. La superposition peut être réalisée de manière manuelle ou automatisée.

Selon un mode de réalisation, dans l'étape C, le moyen de poinçonnage est une pince à oeillets.

Le procédé de l'invention peut comprendre en outre une étape supplémentaire D dans laquelle on forme le panneau structurant de l'invention en appliquant et en fixant à la structure de l'invention 2, 102 et 202 une peau interne 3, 103, perforée ou non, et une peau externe 4, 104. La fixation peut se faire par tout moyen connu de l'homme du métier, notamment par collage. On peut éventuellement superposer deux structures 2, 102 et 202, identiques ou différentes, avant de procéder à l'étape D. Dans ce cas, il est possible d'appliquer et de fixer un septum entre les deux structures de l'invention ainsi superposées. La fixation peut se faire par tout moyen connu de l'homme du métier, notamment par collage.

## Revendications

1. Structure à âme alvéolaire (2 ; 102 ; 202) apte à être utilisée dans un panneau structurant (1 ; 101) pour une nacelle de turboréacteur comprenant au moins un bloc à âme alvéolaire (A, B) comprenant une partie centrale (5a, 5a', 5b, 5b') comportant des cellules alvéolaires de coeur (7a, 7a', 7b, 7b') et au moins deux parties latérales (9a, 9a', 9b, 9b') comportant chacune une pluralité de cellules alvéolaires de jonction (11 a, 11 a', 11 b, 11 b') dont au moins une partie des cellules alvéolaires de jonction (11 a, 11 a', 11 b, 11 b') comporte au moins une paroi supplémentaire (201 a, 201 b) apte à former une jonction, **caractérisée en ce que** le ou les blocs à âme alvéolaire (A, B) sont liés par au moins une zone de jonction (13 ; 113 ; 213) formée par poinçonnage de deux parois supplémentaires (201a, 201b) superposées l'une sur l'autre et provenant de cellules alvéolaires de jonction (11 a, 11 b) appartenant à des parties latérales (9a, 9b) distinctes.

2. Structure (2 ; 102 ; 202) selon la revendication précédente, **caractérisée en ce que** la ou les parois supplémentaires (201 a, 201 b) sont dépliées.

3. Structure (2 ; 102 ; 202) selon la revendication 1 ou 2, **caractérisée en ce que** la longeur de la ou des parois supplémentaires (201 a, 201 b) est supérieure au diamètre du poinçonnage et inférieure ou égale à la longueur du côté d'une cellule alvéolaire de l'âme alvéolaire.

4. Structure (2 ; 102; 202) selon l'une quelconque des revendications précédentes, **caractérisée en ce que** les cellules alvéolaires de jonction (11a, 11 a', 11 b, 11 b') et de coeur (7a, 7a', 7b, 7b') sont constituées de métal, d'un alliage ou d'un matériau composite.

5. Structure (2; 102; 202) selon l'une quelconque des revendications précédente, **caractérisé en ce qu'**elle comporte une pluralité de blocs à âme alvéolaire (A, B) définissant une pluralité de zones de jonction (13 ; 113 ; 213).

6. Structure (2 ; 102 ; 202) selon l'une quelconque des revendications 1 à 4, **caractérisée en ce qu'**elle comporte un unique bloc à âme alvéolaire joint sur lui-même.

7. Panneau structurant (1 ; 101) pour une nacelle de turboréacteur **caractérisé en ce qu'**il comporte au moins une structure à âme alvéolaire (2; 102; 202) selon l'une quelconque des revendications précédentes.

8. Panneau (1 ; 101) selon la revendication précédente, **caractérisé en ce qu'**il est un panneau acoustique.

9. Nacelle pour turboréacteur comprenant un panneau structurant (1 ; 101) selon la revendication 7 ou 8.

10. Procédé de fabrication d'une structure à âme alvéolaire (2 ; 102 ; 202) selon l'une quelconque des revendications 1 à 6, **caractérisé en ce qu'**il comporte des étapes où :
A-on forme au moins une paroi supplémentaire (201 a, 201 b) sur des cellules alvéolaires latérales (11 a, 11 a', 11 b, 11 b') d'au moins un bloc à âme alvéolaire (A, B) définissant deux parties latérales (9a, 9a', 9b, 9b') encadrant une partie centrale (5a, 5a', 5b, 5b');
B-on superpose au moins partiellement les parois supplémentaires (201 a, 201 b) des cellules alvéolaires de jonction (11a, 11 b) appartenant à deux parties latérales (9a, 9b) distinctes ;
C-on joint le ou les blocs à âme alvéolaire (A ;B) en poinçonnant les parois supplémentaires (201 a, 201 b) ainsi supperposées par un moyen de poinçonnage pour former la structure à âme alvéolaire (2 ; 102 ; 202).

11. Procédé selon la revendication précédente, **caractérisé en ce que**, dans l'étape A, on forme la ou les parois supplémentaires (201a, 201b) en coupant sensiblement transversalement un bloc à âme alvéolaire dont les cellules alvéolaires sont expansées.

12. Procédé selon la revendication 10 ou 11, **caractérisé en ce que**, dans l'étape B, on superpose les parois supplémentaires (201a, 201b) lorsque les cellules alvéolaires de jonction (11a, 11b) et/ou de coeur (7a, 7b) ne sont pas expansées.

13. Procédé selon l'une quelconque des revendications 10 à 12, **caractérisé en ce que**, dans l'étape C, le moyen de poinçonnage est une pince à oeillets.

## Claims

1. A structure with a honeycomb core (2; 102; 202) suitable for use in a structuring panel (1: 101) for a turbine engine nacelle comprising at least one block with a honeycomb core (A, B) comprising a central portion (5a, 5a', 5b, 5b') including core honeycomb cells (7a, 7a', 7b, 7b') and at least two side portions (9a, 9a', 9b, 9b') each including a plurality of junction honeycomb cells (11a, 11a', 11b, 11b') for which at least one portion of the junction honeycomb cells (11a, 11a', 11b, 11b') includes at least one additional wall (201 a, 201 b) suitable for forming a junction, **characterized in that** the block(s) with a honeycomb core (A, B) is(are) connected through at least one junction area (13; 113; 213) formed by punching two additional walls (201a, 201b) superposed on each other and stemming from junction honeycomb cells (11 a, 11 b) belonging to distinct side portions (9a, 9b).

2. The structure (2; 102; 202) according to the preceding claim, **characterized in that** the additional wall(s) (201 a, 201 b) is(are) unfolded.

3. The structure (2; 102; 202) according to claim 1 or 2, **characterized in that** the length of the additional wall(s) (201 a, 201 b) is larger than the punching diameter and less than or equal to the length of the side of the honeycomb cell of the honeycomb core.

4. The structure (2; 102; 202) according to any of the preceding claims, **characterized in that** the junction (11a, 11 a', 11 b, 11 b') or core (7a, 7a', 7b, 7b') honeycomb cells consist of metal, of alloy or of composite material.

5. The structure (2; 102; 202) according to any of the preceding claims, **characterized in that** it includes a plurality of four blocks with a honeycomb core (A, B) defining a plurality of junction areas (13; 113; 213).

6. The structure (2; 102; 202) according to any of claims 1 to 4, **characterized in that** it includes a single block with a honeycomb core joined onto itself.

7. A structuring panel (1; 101) for a turbine engine nacelle, **characterized in that** it includes at least one structure with a honeycomb core (2; 102; 202) according to any of the preceding claims.

8. The panel (1; 101) according to the preceding claim, **characterized in that** it is an acoustic panel.

9. A nacelle for a turbine engine comprising a structuring panel (1; 101 according to claim 7 or 8.

10. A method for manufacturing a structure with a honeycomb core (2; 102; 202) according to any of claims 1 to 6, **characterized in that** it includes steps, wherein:
A-at least one additional wall (201a, 201b) is formed on side honeycomb cells (11a, 11 a', 11 b, 11 b') of at least one block with a honeycomb core (A, B) defining two side portions (9a, 9a', 9b, 9b') surrounding a central portion (5a, 5a', 5b, 5b');
B- the additional walls (201a, 201 b) of the junction honeycomb cells (11 a, 11 b) belonging to two distinct side portions (9a, 9b) are at least partly superposed;
C- the block(s) with a honeycomb core (A, B) is(are) joined by punching thereby superposed additional walls (201a, 201b) with a punching means so as to form the structure with a honeycomb core (2; 102; 202).

11. The method according to the preceding claim, **characterized in that**, in step A, the additional wall(s) (201a, 201b) is(are) formed by cutting substantially transversely a block with a honeycomb, the honeycomb cells of which are expanded.

12. The method according to claim 10 or 11, **characterized in that**, in step B, the additional walls (201 a, 201b) are superposed when the junction (11 a, 11 b) or core (7a, 7b) honeycomb cells are not expanded.

13. The method according to any of claims 10 to 12, **characterized in that**, in step C, the punching means is an eyelet clamp.

## Patentansprüche

1. Wabenkernstruktur (2; 102; 202), die imstande ist, in einer Bauplatte (1; 101) für eine Turbotriebwerksgondelverwendet zu werden, die mindestenseinenwabenkernblock (A, B) umfasst, der einen zentralen Abschnitt (5a, 5a', 5b, 5b') umfasst, der Kernwabenzellen (7a, 7a', 7b, 7b') aufweist und mindestenszwei seitliche Abschnitte (9a, 9a', 9b, 9b'), die jeweils eine Vielzahlverbindender Wabenzellen (11a, 11 a', 11 b, 11 b') aufweisen, von denen mindestensein Teil derverbindenden Wabenzellen (11a, 11a', 11b, 11b') mindestenseine zusätzliche Wand (201 a, 201 b) aufweist, die imstande ist, eine Verbindung zu bilden, **dadurch gekennzeichnet**, dassder oder die Wabenkernblöcke (A, B) durch mindestenseine Verbindungszone (13; 113; 213) verbunden sind, die durch Lochenvon zwei zusätzlichen Wänden (201 a, 201b) gebildet wird, die übereinander liegen und von verbindenden Wabenzellen (11a, 11b) herrühren, die zu unterschiedlichen seitlichen Abschnitten (9a, 9b) gehören.

2. Struktur (2; 102; 202) nach vorangehendem Anspruch, **dadurch gekennzeichnet**, dassdie zusätzliche Wand oder die zusätzlichen Wände (201 a, 201 b) aufgefaltet sind.

3. Struktur (2; 102; 202) nach Anspruch 1 oder 2, **dadurch gekennzeichnet**, dassdie Länge der zusätzlichen Wand oder der zusätzlichen Wände (201 a, 201 b) größer ist als der Durchmesser der Lochung und kleiner oder gleich der Länge der Seite einer Wabenzelle des Wabenkerns.

4. Struktur (2; 102; 202) nach einem der vorangehenden Ansprüche, **dadurch gekennzeichnet**, dassdieverbindenden(11 a, 11a', 11b, 11b') und Kernwabenzellen (7a, 7a', 7b, 7b') aus Metall, einer Legierung oder einem Verbundmaterial bestehen.

5. Struktur (2; 102; 202) nach einem der vorangehenden Ansprüche, **dadurch gekennzeichnet, dass** sie eine Vielzahl von Wabenkernblöcken (A, B) aufweist, die eine Vielzahl von Verbindungszonen (13; 113; 213) definieren.

6. Struktur (2; 102; 202) nach einem der Ansprüche 1 bis 4, **dadurch gekennzeichnet**, dasssie einen einzigen Wabenkernblockaufweist, der mit sich selbst verbunden ist.

7. Bauplatte (1; 101) für eineTurbotriebwerksgondel,**dadurch gekennzeichnet, dass** sie mindestenseine Wabenkernstruktur (2; 102; 202) nach einem der vorangehenden Ansprüche aufweist.

8. Platte (1; 101) nach vorangehendem Anspruch, **dadurch gekennzeichnet, dass** sie eine Akustikplatte ist.

9. Turbotriebwerksgondel, die eine Bauplatte (1;101) nach Anspruch 7 oder 8 umfasst.

10. HerstellungsverfahreneinerWabenkernstruktur (2; 102; 202) nach einem der Ansprüche 1 bis 6, **dadurch gekennzeichnet, dass** es die Schritte aufweist, bei denen:
A) mindestenseine zusätzliche Wand (201a, 201 b) auf seitlichen Wabenzellen (11a, 11a', 11b, 11b') mindestenseinesWabenkernblocks (A, B) gebildet wird, die zwei seitliche Abschnitte (9a, 9a', 9b, 9b') definieren, die einen zentralen Abschnitt (5a, 5a', 5b, 5b') einrahmen,
B) die zusätzlichen Wände (201 a, 201 b) derverbindenden Wabenzellen (11a, 11 b), die zu zwei unterschiedlichen seitlichen Abschnitten (9a, 9b) gehören, mindestens teilweise übereinander gelegt werden,
C) die Wabenkernblöcke (A;B) durch Lochen der übereinander gelegten zusätzlichen Wände (201 a, 201 b) mit Hilfe eines Lochstanzmittels verbunden werden, um die Wabenkernstruktur (2; 102, 202) zu bilden.

11. Verfahrennach vorangehendem Anspruch, **dadurch gekennzeichnet**, dassin Schritt Adie zusätzliche Wand oder die zusätzlichen Wände (201a, 201 b) gebildet werden, indem ein Wabenkernblock, dessen Wabenzellen expandiert sind, etwa transversal geschnitten wird.

12. Verfahrennach Anspruch 10 oder 11, **dadurch gekennzeichnet, dass** in Schritt B die zusätzlichen Wände (201 a, 201 b) übereinander gelegt werden, wenn die verbindenden(11a, 11 b) undloderKernwabenzellen(7a, 7b) nichtexpandiert sind.

13. Verfahrennach einem der Ansprüche 10 bis 12, **dadurch gekennzeichnet, dass** das Lochstanzmittel von Schritt C eine Ösenzange ist.
